# FASCICULE DE BREVET EUROPEEN

(11) **EP 3 201 485 B1**
(45) Date de publication et mention de la délivrance du brevet: **18.09.2019**
(21) Numéro de dépôt: 15788130.1
(22) Date de dépôt: 02.10.2015
(51) Int. Cl.: F16D 65/847

(54) **SYSTÈME DE REFROIDISSEMENT D'UN DISQUE DE FREIN DANS UN PASSAGE DE ROUE D'UN VÉHICULE AUTOMOBILE**
SYSTEM ZUR KÜHLUNG EINER BREMSSCHEIBE IN EINEM MOTORFAHRZEUGRADRAUM
SYSTEM FOR COOLING A BRAKE DISK IN A MOTOR VEHICLE WHEEL SPACE

(30) Priorité: 03.10.2014 FR 1459468
(43) Date de publication de la demande: 09.08.2017
(73) Titulaire: Renault S.A.S., 92100 Boulogne-Billancourt (FR)
(72) Inventeur: REY, Patrick, 75012 Paris (FR); HOLLEVILLE, Delphine, 78280 Guyancourt (FR); GERARD, Christophe, 78180 Montigny le Bretonneux (FR); BECAMEL, William, 78180 Montigny le Bretonneux (FR)
(86) Numéro de dépôt international: PCT/FR2015/052639
(87) Numéro de publication internationale: WO 2016/051102

(56) Documents cités:
- EP-A1- 0 327 730
- EP-A1- 1 688 330
- DE-A1- 4 114 761

## Description

L'invention concerne un système de refroidissement d'un disque de frein dans un passage de roue d'un véhicule automobile.

Dans le domaine du freinage des véhicules automobiles par disque, il est nécessaire de contrôler la température des disques de freins, afin que la qualité du freinage ne soit pas dégradée par un échauffement trop important.

Il est connu de solidariser un déflecteur à un bras de suspension d'une roue pour refroidir le disque de frein associé, en guidant un flux d'air pénétrant dans le passage de roue lorsque le véhicule automobile est entrainé en mouvement. Ce déflecteur est sensiblement vertical et orienté selon un axe transversal, de manière sensiblement oblique, pour dévier le flux d'air vers le disque de frein. Le flux d'air entre alors en contact avec une face latérale du disque de frein et un échange thermique s'opère entre le disque de frein et le flux d'air, produisant un refroidissement du disque de frein.

Cependant, cette solution ne permet pas d'obtenir un refroidissement suffisant du disque de frein.

On connaît le document EP 327 730 A1 décrivant un système de refroidissement à air pour disque de frein dans un passage de roue d'un véhicule automobile.

Il existe un besoin pour un système de refroidissement d'un disque de frein plus efficace.

A cet effet, l'objet de l'invention concerne un système de refroidissement à air pour refroidir un disque de frein dans un passage de roue d'un véhicule automobile,
le véhicule automobile présentant une partie avant et une partie arrière, un flux d'air étant apte à pénétrer dans le passage de roue de l'avant vers l'arrière du véhicule automobile, lorsque le véhicule est entrainé en mouvement,
le système de refroidissement comprenant un déflecteur concave, orienté vers l'avant du véhicule et vers le disque de frein, de manière à pouvoir dévier une première partie du flux d'air pénétrant vers le disque de frein tandis qu'une deuxième partie du flux d'air pénétrant est déviée dans une direction sensiblement verticale ;
il comprend en outre un déflecteur auxiliaire situé sensiblement à droit du déflecteur concave, pour diriger la deuxième partie du flux d'air vers le disque de frein. Ainsi on peut utiliser de manière relativement simple l'air pénétrant dans le passage de roue pour refroidir de manière relativement efficace le disque de frein.

En particulier, on peut obtenir une réduction de 20 % du temps de refroidissement par rapport à l'art antérieur, soit environ 40 à 50°C sur un cycle de validation thermique des disques de frein.

Avantageusement et de manière non limitative, le déflecteur auxiliaire peut comprendre :
- une partie arrière comprenant une face transversale arrière de forme concave orientée vers l'avant et vers le disque de frein ; et
- une partie avant comprenant une face transversale avant de forme concave orientée vers l'arrière et vers le disque de frein.

Ainsi, le déflecteur auxiliaire peut présenter une forme sensiblement en U ou en U inversé, qui permet d'optimiser le guidage de la deuxième partie du flux d'air vers le disque de frein. Autrement dit, on peut réduire le volume de la deuxième partie du flux d'air perdue dans le passage de frein, et ainsi augmenter le volume de la deuxième partie du flux d'air utilisé pour l'échange thermique de refroidissement du disque de frein

Avantageusement et de manière non limitative, la partie arrière du déflecteur auxiliaire peut présenter une face longitudinale s'étendant dans une direction sensiblement longitudinale et la face longitudinale présente une ouverture longitudinale débouchant sur une partie radialement médiane du disque de frein.

On entend par partie radialement médiane du disque de frein, une partie en forme de couronne géométrique d'une surface latérale circulaire du disque de frein, qui s'étend entre deux cercles dont les longueurs des rayons peuvent être comprises entre 20% et 80% de la valeur du rayon de la surface latérale circulaire du disque de frein.

Ainsi on peut obtenir un meilleur guidage du flux d'air vers le disque de frein.

En particulier, la partie arrière et la partie avant du déflecteur auxiliaire peuvent être disjointes.

Le passage de roue étant un espace relativement encombré de pièces mécaniques, parmi lesquels, par exemple, les amortisseurs, les bras de suspensions, le porte-fusée, il peut ainsi être moins difficile d'intégrer le déflecteur auxiliaire dans le passage de roue.

En particulier, le véhicule peut comprendre un amortisseur et le déflecteur auxiliaire peut présenter une ouverture conformée pour permettre le passage de l'amortisseur. L'amortisseur se trouvant généralement au droit du déflecteur concave, il est alors possible d'intégrer le déflecteur auxiliaire autour de l'amortisseur, ce qui permet de positionner le déflecteur auxiliaire de manière relativement optimale pour récupérer de la deuxième partie du flux d'air pénétrant.

Avantageusement et de manière non limitative, le déflecteur concave peut être solidarisé à un élément de maintien inférieur, par exemple un bras de suspension inférieur. Ainsi le déflecteur concave peut être placé de manière relativement optimale pour dévier le flux d'air pénétrant dans le passage de roue.

En particulier le déflecteur concave et le bras de suspension peuvent être d'une pièce.

Le déflecteur concave peut présenter des encoches ou des découpes, usinées ou moulées, de manière à ce que l'élément de support du déflecteur concave, par exemple le bras de suspension inférieur, puisse bouger sans que le déflecteur concave qu'il supporte ne percute ou n'abime d'autres éléments mécaniques du passage de roue.

Avantageusement et de manière non limitative, le déflecteur auxiliaire peut être solidarisé à un élément de support supérieur, par exemple un porte-fusée. Ainsi le déflecteur auxiliaire peut être placé de manière relativement optimale pour dévier la deuxième partie du flux d'air pénétrant dans le passage de roue, vers le disque de frein.

En particulier le déflecteur auxiliaire et le porte-fusée peuvent être d'une pièce.

Le déflecteur auxiliaire peut présenter des encoches ou des découpes, usinées ou moulées, de manière à ce que l'élément de support du déflecteur auxiliaire, par exemple le porte-fusée, puisse bouger sans que le déflecteur concave qu'il supporte ne percute ou n'abime d'autres éléments mécaniques du passage de roue.

Avantageusement et de manière non limitative, un muret peut s'étendre sensiblement verticalement et transversalement à l'avant du déflecteur concave, le muret présentant une encoche conformée pour guider le flux d'air pénétrant dans le passage de roue en direction du déflecteur concave.

Autrement dit on peut diriger une partie du flux d'air de soubassement vers le passage de roue ; cette partie constituant le flux d'air pénétrant dans le passage de roue.

Ainsi on peut guider de manière relativement efficace un flux d'air pénétrant dans le passage de roue vers le déflecteur concave.

L'invention concerne aussi un véhicule automobile comprenant un système de refroidissement tel que décrit précédemment.

L'invention est maintenant décrite en référence aux dessins annexés, non limitatifs, dans lesquels :
- la figure 1 est une vue en perspective d'un système de refroidissement à air selon un premier mode de réalisation de l'invention;
- la figure 2 est une vue en perspective d'un système de refroidissement à air selon un deuxième mode de réalisation de l'invention ;
- la figure 3a est une vue longitudinale d'un déflecteur concave et d'un déflecteur auxiliaire selon le deuxième mode de réalisation de l'invention ;
- la figure 3b est une vue transversale d'un déflecteur concave et d'un déflecteur auxiliaire selon le deuxième mode de réalisation ;
- la figure 4 est une vue de détail d'un déflecteur auxiliaire et d'un disque de frein selon le deuxième mode de réalisation de l'invention ;
- la figure 5 est une vue en perspective de l'avant d'un véhicule automobile selon un mode de réalisation particulier de l'invention ;

Dans la présente description, les termes avant, arrière, supérieur, inférieur, font référence aux directions avant et arrière du véhicule.

Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

L'invention se rapporte à un système de refroidissement 1 à air pour refroidir un disque de frein 2 dans un passage de roue 3 d'un véhicule automobile 4. Le véhicule automobile 4 présente une partie avant, non représentée, et une partie arrière, non représentée.

Un flux d'air F1 pénètre dans le passage de roue 3 de l'avant vers l'arrière du véhicule automobile 4 lorsque le véhicule 4 est entraîné en mouvement. On considère ici que le véhicule 4 est entrainé en mouvement dans le sens naturel de l'avancement d'un véhicule automobile 4, défini par un vecteur vitesse dont la direction est colinéaire à la direction longitudinale du véhicule automobile 4, et dirigé de l'arrière vers l'avant du véhicule 4.

Le système de refroidissement 1 comprend un déflecteur concave 20 orienté vers l'avant du véhicule 4 et vers le disque de frein 2, de manière à dévier une première partie F2 du flux d'air F1 pénétrant dans le passage de roue 11, aussi nommé flux direct F2, vers le disque de frein 2, tandis qu'une deuxième partie F3 du flux d'air F1 est dirigée dans une direction sensiblement verticale.

Le système de refroidissement 1 comprend en outre un déflecteur auxiliaire 22 situé dans une direction sensiblement verticale du déflecteur concave 20. Autrement dit, le déflecteur auxiliaire 22 est situé sensiblement au droit du déflecteur concave 20.

Ce déflecteur auxiliaire 22 est conformé pour orienter la deuxième partie F3 du flux d'air F1, aussi nommée flux ascendant F3, en direction du disque de freins 2 et de l'étrier 21.

A cet effet, le déflecteur auxiliaire 22 comprend une partie arrière 26 et une partie avant 24.

La partie arrière 26 comprend une face transversale arrière 27 de forme concave orientée vers l'avant et vers le disque de frein 2.

Autrement dit, la courbure de la face transversale arrière 27 est orientée de telle sorte que le flux ascendant F3 soit canalisé par le déflecteur auxiliaire 22 afin d'être dirigé, pour une partie rétrograde F5, le long de la face transversale arrière 27, de l'arrière vers l'avant du véhicule 4 et pour une première partie déviée F4 en direction du disque de frein 2.

La partie arrière 26 comprend aussi une face longitudinale 28 s'étendant dans une direction sensiblement longitudinale et présentant une ouverture longitudinale 29 débouchant sur une partie radialement médiane 50 du disque de frein 2.

Autrement dit, la face longitudinale 28 est en vis-à-vis avec le disque de frein 2 de telle sorte que la face longitudinale 28 fait barrière au premier flux dévié F4, avant qu'il n'entre en contact avec le disque de frein 2.

La face longitudinale 28 définit une ouverture longitudinale 29 conformée pour que le premier flux dévié F4 puisse passer au moins partiellement au travers de cette ouverture longitudinale 28 afin de refroidir par échange thermique le disque de frein 2 sur une zone radialement médiane 50 du disque de frein 2.

Ainsi, on peut optimiser le refroidissement du disque de frein 2 en guidant le premier flux dévié F4 dans le passage de roue 3 vers la zone radialement médiane 50 du disque de frein 2.

La partie avant 24 comprend une face transversale avant 25 de forme concave, orientée vers l'arrière du véhicule 4 et vers le disque de frein 2.

La partie avant 24 est conformée pour canaliser la partie rétrograde F5 du flux d'air ascendant F3, aussi nommée flux rétrograde F5, afin d'en rediriger une partie F6 vers le disque de frein 2 et vers l'étrier 21, cette partie étant nommée deuxième flux dévié F6.

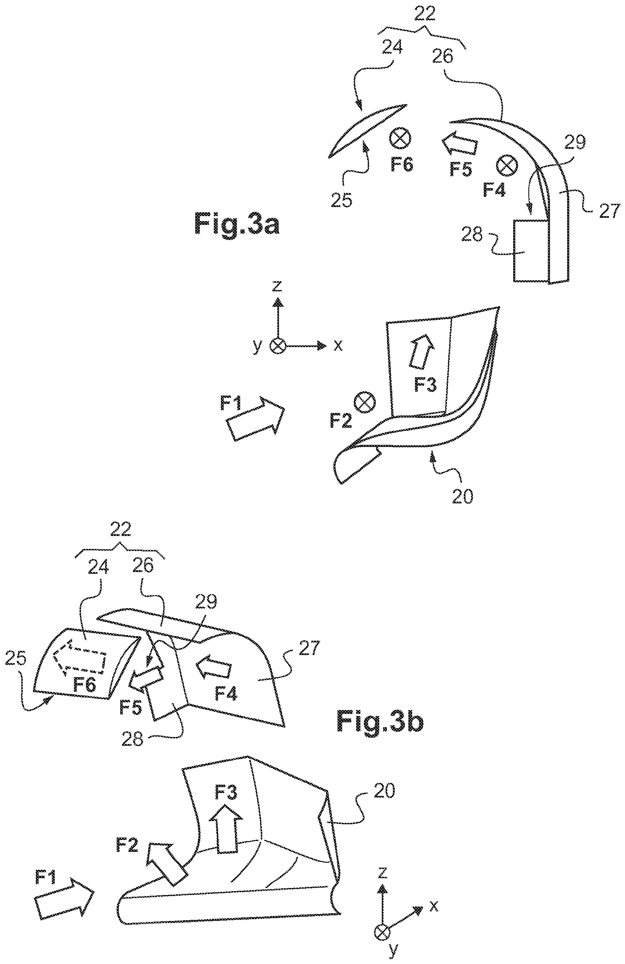

Autrement dit, en référence aux figures 3a et 3b, le flux d'air F1 pénétrant dans le passage de roue 3 est séparé en un flux direct F2 orienté directement vers le disque de frein 2 et en un flux ascendant F3.

Ce flux ascendant F3 est alors canalisé par la partie arrière 26 du déflecteur auxiliaire 22 afin d'être orientée sous forme d'un premier flux déviée F4 vers une ouverture longitudinale 29 de la face longitudinale 28 débouchant sur une zone radialement médiane 50 du disque de frein 2, tandis qu'une autre partie forme un flux rétrograde F5 vers l'avant du véhicule 4.

Le flux rétrograde F5 est ensuite orientée au moins en partie par la partie avant 24 du déflecteur auxiliaire 22 vers le disque de frein 2, sous forme d'un deuxième flux dévié F6.

Ainsi, le flux d'air F1 pénétrant dans le passage de roue 3 est canalisé vers le disque de frein 2, et une relativement faible partie de ce flux d'air F1 est perdue dans le passage de roue 3.

On peut donc optimiser l'utilisation du flux d'air F1 pénétrant dans le passage de roue 3 pour refroidir efficacement le disque de frein 2.

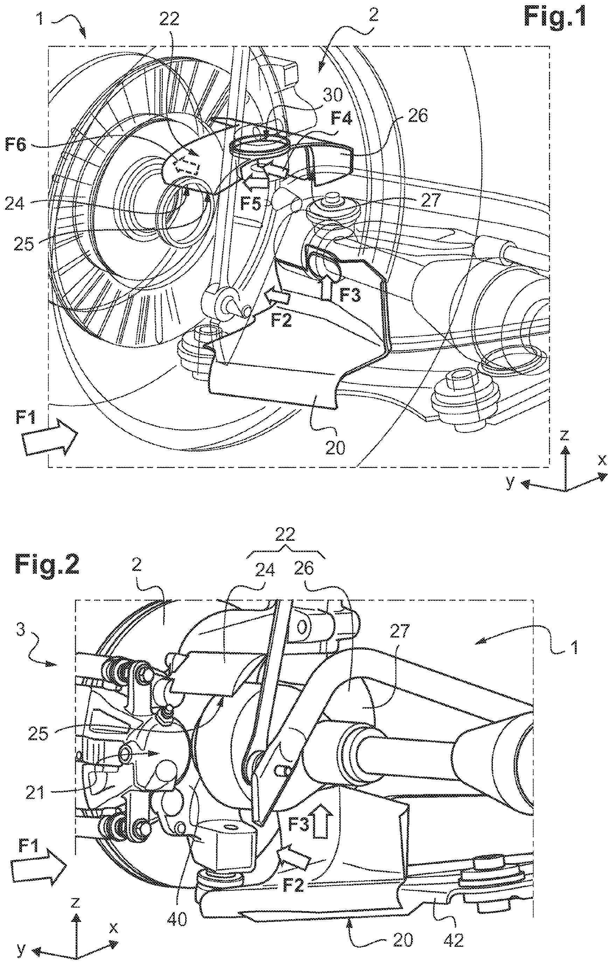

Dans un premier mode de réalisation, en référence aux figures 2, 3a et 3b, la partie arrière 26 du déflecteur auxiliaire 22 et la partie avant 24 du déflecteur auxiliaire 22 sont disjointes. Ainsi on peut intégrer de manière moins complexe le déflecteur auxiliaire dans le passage de roue, à une position optimale pour le refroidissement du disque de frein, sans qu'il soit nécessaire de modifier ou d'adapter l'agencement des éléments mécaniques dans le passage de roue.

Dans ce mode de réalisation, la partie arrière 26 et la partie avant 24 disjointes sont solidarisées sur un porte-fusée 40.

Le déflecteur concave 20 est solidarisé à un élément de support inférieur 42, ici un bras de suspension inférieur 42.

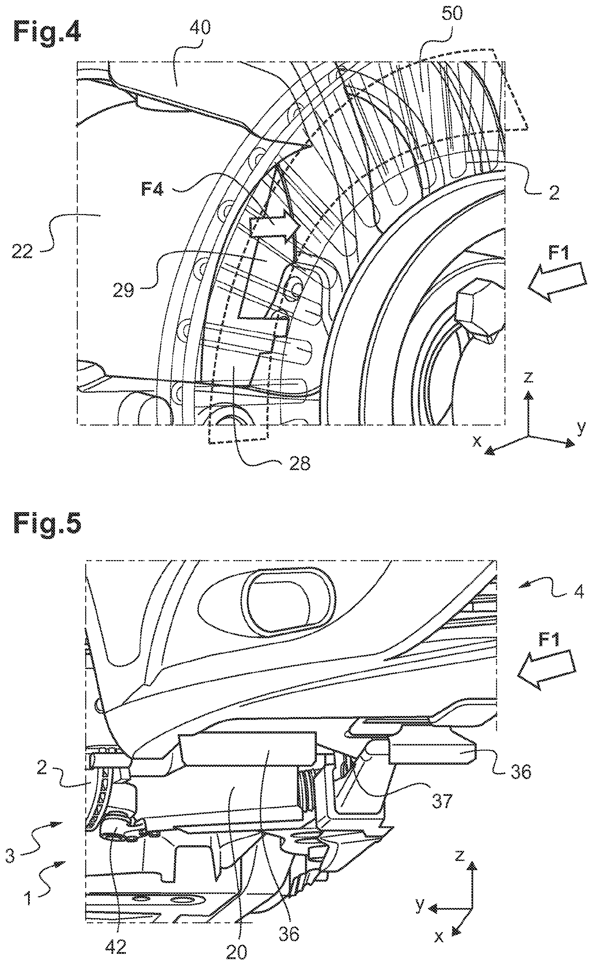

Dans un deuxième mode de réalisation, en référence aux figures 1 et 4, la partie arrière 26 et la partie avant 24 du déflecteur auxiliaire 22 sont d'une pièce.

Le déflecteur auxiliaire 22 comprend alors une ouverture 30 de forme circulaire, conformée pour recevoir un amortisseur du véhicule automobile 4.

Autrement dit, l'amortisseur associé à la roue du passage de roue 3 concerné par le système de refroidissement 1, traverse et vient s'insérer au travers de l'ouverture 30 du déflecteur auxiliaire 22.

Le déflecteur auxiliaire 22 peut aussi être solidarisé à cet amortisseur par une bague de fixation.

La bague de fixation comprend une partie circulaire enserrant l'amortisseur et une jupe solidaire du déflecteur auxiliaire.

En référence à la figure 5, selon un mode de réalisation particulier de l'invention, le système de refroidissement 1 comprend un muret 36 s'étendant sensiblement verticalement et transversalement en avant du déflecteur concave.

Le muret 36 est une paroi allongée, de forme sensiblement rectangulaire, qui peut être fait en matériau polymère ou en matériau métallique.

Le muret 36 oppose une résistance au flux d'air de soubassement, orienté de l'avant vers l'arrière du véhicule, lorsque le véhicule est entrainé en mouvement.

Le muret 36 est fixé sensiblement au-devant de la roue avant et est orienté transversalement, sa fonction étant alors de dévier l'air vers un côté latéral du véhicule pour éviter qu'un excès d'air arrive directement sur la roue.

Le muret 36 présente une encoche 37 conformée pour autoriser le passage d'une partie du flux d'air de soubassement, cette partie formant le flux d'air F1 pénétrant dans le passage de roue 3.

Le muret 36, et en particulier l'encoche 37, est conformé pour diriger le flux d'air F1 pénétrant dans le passage de roue 3 en direction du déflecteur concave 20.

Dans un mode de réalisation préférée, le système de refroidissement est appliqué au passages de roues du train de roues avant du véhicule automobile 4.

Cependant, on pourrait envisager d'adapter une telle solution au train arrière d'un véhicule automobile 4 afin d'optimiser le refroidissement du disque de frein 2 par un flux d'air pénétrant F1 dans le passage de roue 3 du train arrière.

Néanmoins, une telle solution nécessite d'adapter le déflecteur auxiliaire 22 afin de pouvoir collecter l'air redirigé dans une direction sensiblement verticale par un déflecteur concave 20 disposé dans le passage de roue 3 du train arrière du véhicule automobile 4. L'homme du métier est apte à effectuer une telle adaptation.

Lorsque le déflecteur auxiliaire 22 et le déflecteur concave 20 sont orientés transversalement vers le disque de frein 2, cette orientation peut être un angle compris entre 10° et 15° par rapport à la direction transversale Y du véhicule 4 afin de favoriser l'échappement latéral du flux d'air F2, F4, F6.

L'orientation sensiblement verticale des déflecteurs auxiliaires et concaves peuvent être aussi de + ou - 15° par rapport à la direction verticale du véhicule 4, pour favoriser l'orientation sensiblement ascendante du flux d'air ascendant F3.

Dans un mode de réalisation particulier, le déflecteur concave 20 présente des dimensions de 250 mm selon une direction transversale, et une hauteur de 100 mm.

Dans un mode de réalisation, le déflecteur auxiliaire 22, présente une largeur d'environ 80 mm selon la direction transversale, et une hauteur d'environ 80 mm selon la direction verticale.

Le déflecteur auxiliaire 22 peut être en matériau polymère, en matériau métallique, ou en tout autre matériau adapté.

Le déflecteur auxiliaire peut être solidarisé par des moyens mécaniques, par exemple des rivets ou une soudure au porte-fusée du véhicule, il peut aussi être moulé d'une pièce avec le porte-fusée.

Dans un mode de réalisation, le muret 36 présente des dimensions de 200 mm transversalement et de 40 mm de hauteur.

Toutes ces grandeurs peuvent être adaptées par l'homme du métier en fonction des caractéristiques du véhicule automobile considéré.

En particulier, l'efficacité du système de refroidissement 1 est fonction du volume disponible entre le bras inférieur de direction, sans référence, et la transmission. Plus la partie inférieure sera basse, plus le volume sera conséquent, et plus le débit dans cette zone du passage de roue 3 sera grand. Ainsi, le refroidissement obtenu sera rendu encore meilleur.

## Revendications

1. Système de refroidissement (1) à air pour refroidir un disque de frein (2) dans un passage de roue (3) d'un véhicule automobile (4),
le véhicule automobile (4) présentant une partie avant et une partie arrière, un flux d'air (F1) étant apte à pénétrer dans ledit passage de roue (3) de l'avant vers l'arrière du véhicule automobile (4), lorsque ledit véhicule (4) est entrainé en mouvement, **caractérisé en ce que** le système de refroidissement (1) comprend un déflecteur concave (20), orienté vers l'avant du véhicule (4) et vers le disque de frein (2), de manière à pouvoir dévier une première partie (F2) du flux d'air (F1) vers ledit disque de frein (2) tandis qu'une deuxième partie (F3) du flux d'air (F1) est déviée dans une direction sensiblement verticale ;
et en outre un déflecteur auxiliaire (22) situé sensiblement à droit du déflecteur concave (20), pour diriger ladite deuxième partie (F3) du flux d'air (F1) vers le disque de frein (2).

2. Système de refroidissement (1) selon la revendication 1, **caractérisé en ce que** le déflecteur auxiliaire (22) comprend :
- une partie arrière (26) comprenant une face transversale arrière (27) de forme concave orientée vers l'avant et vers le disque de frein (2) ; et
- une partie avant (24) comprenant une face transversale avant (25) de forme concave orientée vers l'arrière et vers le disque de frein (2).

3. Système de refroidissement (1) selon la revendication 2, **caractérisé en ce que** la partie arrière (26) du déflecteur auxiliaire (22) présente une face longitudinale (28) s'étendant dans une direction sensiblement longitudinale et **en ce que** ladite face longitudinale (28) présente une ouverture longitudinale (29) débouchant sur une partie radialement médiane (50) du disque de frein (2).

4. Système de refroidissement (1) selon l'une quelconque des revendications 2 ou 3, **caractérisé en ce que** la partie arrière (26) et la partie avant (24) du déflecteur auxiliaire (22) sont disjointes.

5. Système de refroidissement (1) selon l'une quelconque des revendications 1 à 4, **caractérisé en ce que** ledit véhicule comprend un amortisseur et le déflecteur auxiliaire (22) présente une ouverture conformée pour permettre le passage dudit amortisseur.

6. Système de refroidissement (1) selon l'une quelconque des revendications 1 à 5, **caractérisé en ce que** le déflecteur concave (20) est solidarisé à un élément de maintien inférieur (42).

7. Système de refroidissement (1) selon l'une quelconque des revendications 1 à 6, **caractérisé en ce que** le déflecteur auxiliaire (22) est solidarisé à un élément de support supérieur (40).

8. Système de refroidissement (1) selon l'une quelconque des revendications 1 à 7, **caractérisé en ce qu'**il comprend en outre un muret (36) s'étendant sensiblement verticalement et transversalement à l'avant du déflecteur concave (20), ledit muret (36) présentant une encoche (37) conformée pour guider le flux d'air (F1) pénétrant dans ledit passage de roue (3) en direction du déflecteur concave (20).

9. Véhicule automobile (4) comprenant un système de refroidissement (1) selon l'une quelconque des revendications 1 à 8.

## Patentansprüche

1. Luftkühlsystem (1) zum Kühlen einer Bremsscheibe (2) in einem Radkasten (3) eines Kraftfahrzeugs (4), wobei das Kraftfahrzeug (4) einen vorderen Teil und einen hinteren Teil aufweist, wobei ein Luftstrom (F1) in der Lage ist, von der Vorderseite zur Hinterseite des Fahrzeugs (4) hin in den Radkasten (3) einzudringen, wenn das Fahrzeug (4) zur Bewegung angetrieben wird,
**dadurch gekennzeichnet, dass** das Kühlsystem (1) umfasst:
einen konkaven Deflektor (20), welcher zur Vorderseite des Fahrzeugs (4) und zur Bremsscheibe (2) hin ausgerichtet ist, so dass er einen ersten Teil (F2) des Luftstroms (F1) zur Bremsscheibe (2) hin ablenken kann, während ein zweiter Teil (F3) des Luftstroms (F1) in einer im Wesentlichen vertikalen Richtung abgelenkt wird;
und außerdem einen Hilfsdeflektor (22), der im Wesentlichen über dem konkaven Deflektor (20) angeordnet ist, um den zweiten Teil (F3) des Luftstroms (F1) zur Bremsscheibe (2) hin zu lenken.

2. Kühlsystem (1) nach Anspruch 1, **dadurch gekennzeichnet, dass** der Hilfsdeflektor (22) umfasst:
- einen hinteren Teil (26), der eine quer verlaufende hintere Fläche (27) von konkaver Form umfasst, die nach vorn und zur Bremsscheibe (2) hin ausgerichtet ist; und
- einen vorderen Teil (24), der eine quer verlaufende vordere Fläche (25) von konkaver Form umfasst, die nach hinten und zur Bremsscheibe (2) hin ausgerichtet ist.

3. Kühlsystem (1) nach Anspruch 2, **dadurch gekennzeichnet, dass** der hintere Teil (26) des Hilfsdeflektors (22) eine Längsfläche (28) aufweist, die sich in einer im Wesentlichen längs verlaufenden Richtung erstreckt, und dadurch, dass die Längsfläche (28) eine Längsöffnung (29) aufweist, die über einem radial mittleren Teil (50) der Bremsscheibe (2) mündet.

4. Kühlsystem (1) nach einem der Ansprüche 2 oder 3, **dadurch gekennzeichnet, dass** der hintere Teil (26) und der vordere Teil (24) des Hilfsdeflektors (22) disjunkt sind.

5. Kühlsystem (1) nach einem der Ansprüche 1 bis 4, **dadurch gekennzeichnet, dass** das Fahrzeug einen Stoßdämpfer umfasst und der Hilfsdeflektor (22) eine Öffnung aufweist, die dafür ausgebildet ist, den Durchgang des Stoßdämpfers zu ermöglichen.

6. Kühlsystem (1) nach einem der Ansprüche 1 bis 5, **dadurch gekennzeichnet, dass** der konkave Deflektor (20) mit einem unteren Halteelement (42) fest verbunden ist.

7. Kühlsystem (1) nach einem der Ansprüche 1 bis 6, **dadurch gekennzeichnet, dass** der Hilfsdeflektor (22) mit einem oberen Stützelement (40) fest verbunden ist.

8. Kühlsystem (1) nach einem der Ansprüche 1 bis 7, **dadurch gekennzeichnet, dass** es außerdem ein Trennwandstück (36) umfasst, das sich im Wesentlichen vertikal und quer vor dem konkaven Deflektor (20) erstreckt, wobei das Trennwandstück (36) einen Einschnitt (37) aufweist, der dafür ausgebildet ist, den Luftstrom (F1), der in den Radkasten (3) eindringt, in Richtung des konkaven Deflektors (20) zu führen.

9. Kraftfahrzeug (4), welches ein Kühlsystem (1) nach einem der Ansprüche 1 bis 8 umfasst.

## Claims

1. Cooling system (1) using air to cool a brake disc (2) in a wheel well (3) of a motor vehicle (4),
the motor vehicle (4) having a front part and a rear part, an air flow (F1) being able to enter said wheel well (3) from front to rear of the motor vehicle (4), when said vehicle (4) is in motion,
**characterized in that**
the cooling system (1) comprises a concave deflector (20) oriented towards the front of the vehicle (4) and towards the brake disc (2), so as to be able to deflect a first part (F2) of the air flow (F1) towards the brake disc (2) while a second part (F3) of the air flow (F1) is deflected in an essentially vertical direction;
and
also an auxiliary deflector (22) located essentially in line with the concave deflector (20) in order to deflect said second part (F3) of the air flow (F1) towards the brake disc (2).

2. Cooling system (1) according to Claim 1, **characterized in that** the auxiliary deflector (22) comprises:
- a rear part (26) comprising a transverse rear face (27) which is concave facing forwards and towards the brake disc (2); and
- a front part (24) comprising a transverse front face (25) which is concave facing rearwards and towards the brake disc (2).

3. Cooling system (1) according to Claim 2, **characterized in that** the rear part (26) of the auxiliary deflector (22) has a longitudinal face (28) that extends in an essentially longitudinal direction, and **in that** said longitudinal face (28) has a longitudinal opening (29) that opens onto a radially median part (50) of the brake disc (2).

4. Cooling system (1) according to either one of Claims 2 and 3, **characterized in that** the rear part (26) and the front part (24) of the auxiliary deflector (22) are not connected.

5. Cooling system (1) according to any one of Claims 1 to 4, **characterized in that** said vehicle comprises a shock absorber and the auxiliary deflector (22) has an opening that is shaped to accommodate said shock absorber.

6. Cooling system (1) according to any one of Claims 1 to 5, **characterized in that** the concave deflector (20) is secured to a lower holding element (42).

7. Cooling system (1) according to any one of Claims 1 to 6, **characterized in that** the auxiliary deflector (22) is secured to an upper support element (40).

8. Cooling system (1) according to any one of Claims 1 to 7, **characterized in that** it further comprises a wall (36) extending essentially vertically and transversely forward of the concave deflector (20), said wall (36) having a notch (37) that is shaped so as to guide the air flow (F1) entering said wheel well (3) in the direction of the concave deflector (20).

9. Motor vehicle (4) comprising a cooling system (1) according to any one of Claims 1 to 8.
